# EUROPEAN PATENT SPECIFICATION

(11) **EP 3 177 885 B1**
(45) Date of publication and mention of the grant of the patent: **15.08.2018**
(21) Application number: 15738206.0
(22) Date of filing: 29.06.2015
(51) Int. Cl.: F28F 13/06, F25B 40/00, F28F 13/12, F28D 7/10

(54) **INTERNAL HEAT EXCHANGER AND METHOD FOR MAKING THE SAME**
INTERNER WÄRMETAUSCHER UND VERFAHREN ZUR HERSTELLUNG DAVON
ÉCHANGEUR DE CHALEUR INTERNE ET SON PROCÉDÉ DE FABRICATION

(30) Priority: 06.08.2014 US 201414453247
(43) Date of publication of application: 14.06.2017
(73) Proprietor: Contitech North America, Inc., Rochester Hills, MI 48309 (US)
(72) Inventor: BAXI, Nikhil, Orion Tonwship, MI48359 (US)
(74) Representative: Finger, Karsten
(86) International application number: PCT/US2015/038333
(87) International publication number: WO 2016/022231

(56) References cited:
- EP-A1- 2 333 472
- JP-A- 2004 278 854
- US-A- 2 120 764
- US-A1- 2004 244 958
- US-A1- 2010 230 082

## Description

### FIELD OF THE INVENTION

The invention relates to an internal heat exchanger having a compact design, in particular an internal heat exchanger for a motor vehicle. It relates more particularly to an internal heat exchanger according to the preamble of claim 1. Such a heat exchanger is disclosed on figure 7 of US 2010/0230082 A1.

### BACKGROUND OF THE INVENTION

Internal heat exchangers are used for air conditioning systems in motor vehicles. In particular, they are used to increase the efficiency and the performance of a vehicle air conditioning system. These increases in performance and efficiency can be achieved through the implementation of a coaxial heat exchanger wherein, for example, a liquid refrigerant is guided around the outside of the suction tube. Known heat exchangers do not adequately combine efficiency of cooling with a compact design.

WO 2014/026176 discloses a suction flow enhancement for an internal heat exchanger. The flow enhancer or insert is disposed in the inner tube to divert the flow of the fluid in the inner tube towards the walls of the inner tube. The diversion of the flow toward the outer wall of the inner tube improves the efficiency of the internal heat exchanger. The flow enhancer can, for example, be an elongate member configured to divert the flow toward the outer wall of the inner tube by blocking the flow in the middle of the inner tube.

United States patent application publication 2013/0299143 A1 discloses an internal heat exchanger having a thermally conductive spiral element wound around the inner tube of the heat exchanger and disposed in an annular space between the inner tube and an outer tube of the internal heat exchanger.

### SUMMARY OF THE INVENTION

It is an object of the invention to provide an internal heat exchanger having an increased efficiency and a compact design. The internal heat exchanger includes an inner tube and a sleeve. The inner tube can also be referred to as a suction tube. The sleeve or outer tube surrounds a portion of the inner tube and is coaxial thereto. The sleeve has a spiral profile on its inner side of the sleeve wall. The spiral profile of the sleeve has a first spiral groove running clockwise and a second spiral groove running counterclockwise. The first and the second spiral grooves mutually intersect at cross-points. The cross-points generate additional turbulence and flow resistance. The spiral profile of the outer tube is in contact with the outer wall of the inner tube and thus a fluid flowing through the spiral profile is in fluid contact engagement with the outer wall of the inner tube to facilitate the heat transfer.

In order to further increase heat transfer, an insert or flow enhancer is arranged in the inner tube. The insert diverts suction flow, that is, the fluid flowing through the inner tube, towards the walls of the inner tube. This diversion of the suction flow towards the walls of the inner tube increases the transfer of heat between the fluid in the inner tube and the inner wall of the inner tube, resulting in an improved efficiency of the internal heat exchanger. The insert blocks the flow in the center of the inner tube to divert the flow in the inner tube toward the inner wall of the inner tube. Such a configuration of an internal heat exchanger can result in a very compact internal heat exchanger as well as increased efficiency thereof. Thus, the size of an air conditioning system can be reduced. Further due to the increase in efficiency, the length of the internal heat exchanger can be reduced with respect to conventional internal heat exchangers. The compact design further facilitates in supporting air conditioning assembly routing.

A method of making an internal heat exchanger includes providing an inner or suction tube. A sleeve defining a spiral profile, a fluid inlet, and a fluid outlet is arranged around the inner tube. The sleeve is pressed or crimped to fix the outer sleeve with respect to the inner tube and so as to cause the spiral profile to contact the suction tube. A flow enhancer can also be inserted into the inner tube to further increase the heat transfer between the fluid flowing through the inner tube and the wall of the inner tube. If a flow enhancer is inserted into the inner tube prior to the crimping of the sleeve, the crimping of the sleeve onto the inner tube can also fix the flow enhancer in the inner tube.

### BRIEF DESCRIPTION OF THE DRAWINGS

The invention will now be described with reference to the drawings wherein:
FIG. 1 is a schematic of an air conditioning system with a compact internal heat exchanger;
FIG. 2 is an enlarged view of the internal heat exchanger of FIG. 1;
FIG. 3 shows a sleeve having a dual patterned spiral groove;
FIG. 4 shows the sleeve of FIG. 3 with two tubes configured as a fluid inlet and a fluid outlet;
FIG. 5 shows an inner tube of an internal heat exchanger and a flow enhancer;
FIG. 6 shows the flow enhancer of FIG. 5 arranged within the inner tube of FIG. 5; and,
FIG. 7 shows the internal heat exchanger being crimped.

### DESCRIPTION OF THE PREFERRED EMBODIMENTS OF THE INVENTION

An internal heat exchanger according to the present invention can be used in a plurality of applications, for example, in an air conditioning system of a motor vehicle. The internal heat exchanger will be described below in the exemplary context of an air conditioning system for a motor vehicle.

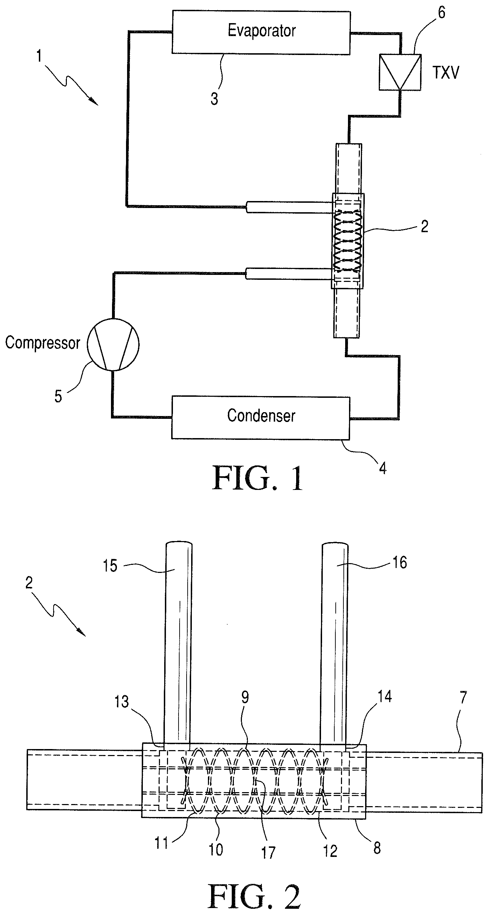

FIG. 1 is a schematic representation of an air conditioning system 1 with a compact internal heat exchanger 2. The air conditioning system 1 includes an evaporator 3 which may serve as a low pressure heat exchanger and can, for example, be exposed to passing cooling air flowing through an engine compartment of a motor vehicle. A compressor 5 can, for example, be driven by the engine of the motor vehicle in order to compress a low pressure refrigerant to provide a high pressure high temperature refrigerant. The air conditioning system 1 of FIG. 1 further includes a condenser 4 which may be configured as a high pressure heat exchanger for cooling the high pressure, high temperature refrigerant. An expansion valve, such as a thermal expansion valve 6, can be used as a pressure reducer for the air conditioning system. A refrigerant is compressed into a high pressure high temperature refrigerant by the compressor 5 and is then supplied to the condenser 4. From the condenser, the fluid flows through an inner tube 7 of the internal heat exchanger. The fluid then flows through the thermal expansion valve 6 to the evaporator 3. From the evaporator 3 the fluid enters the outer tube or sleeve 8 of the internal heat exchanger 2.

FIG. 2 shows the internal heat exchanger from FIG. 1 in an enlarged view. The internal heat exchanger 2 includes an inner tube 7 which can also be referred to as the suction tube. The inner tube is configured to have a fluid flow therethrough in an axial direction. Heat can be transferred between the fluid flowing through the inner tube and the wall of the inner tube. A sleeve 8 or outer tube having a spiral or helical profile 9 on its inner wall is arranged around the inner tube. The spiral profile includes at least a first spiral groove 10.

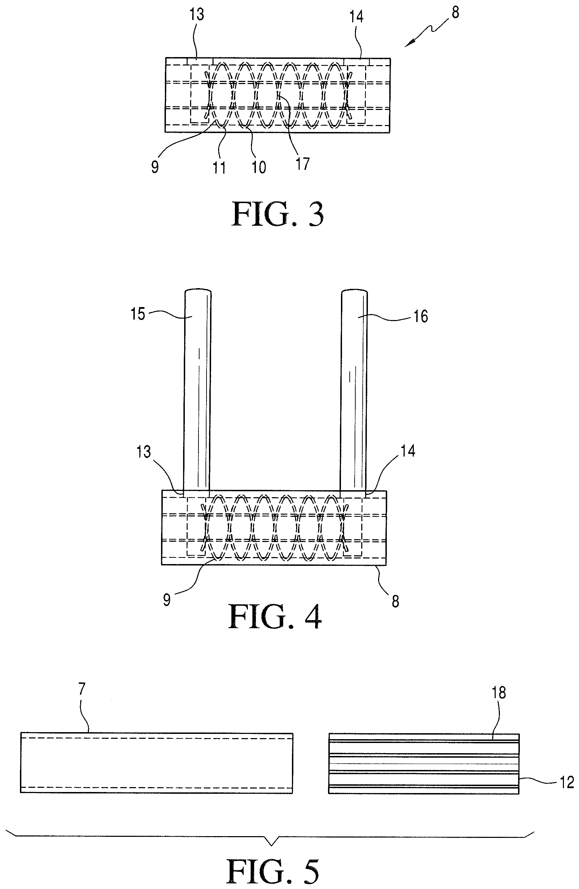

FIG. 3 shows the sleeve 8 with two openings including a fluid inlet 13 and a fluid outlet 14. An inlet tube 15 and an outlet tube 16 can be brazed onto the fluid inlet 13 and the fluid outlet 14, respectively, as shown in FIG. 4. A fluid, for example a liquid refrigerant, enters the internal heat exchanger 2 from the inlet tube 15 via the inlet 13. The fluid then flows through the spiral profile 9 of the sleeve 8 and around the inner tube 7. The fluid flowing through the spiral profile 9 contacts the outer wall of the inner tube 7 and promotes the transfer of heat between the fluid flowing through the spiral profile 9 and the wall of the inner tube 7. The sleeve can be arranged tightly around the inner tube so as to minimize the fluid supplied via the fluid inlet from flowing through the sleeve in the axial direction. The fluid flows through the spiral profile and exits the heat exchanger through the outlet tube 16 via the fluid outlet 14.

In a preferred embodiment, the spiral profile 9 further includes a second groove 11. The first groove 10 can run in a clockwise or counterclockwise direction and the second groove 11 running in an opposite direction to the first spiral groove 10, thus providing the sleeve 8 with a groove running clockwise and a groove running counter-clockwise. The first and the second grooves intersect at cross-points 17. A spiral profile having spiral grooves in cross direction creates turbulence and adds resistance to a fluid flowing through the sleeve at each cross-point and slows down the fluid flow through the sleeve. A slower fluid flow results in increased heat transfer between the outer wall of the inner tube 7 and the sleeve 8, in particular the fluid flowing through the spiral profile 9.

An insert 12 configured as a flow enhancer can additionally be disposed in the inner tube 7 to increase the heat transfer. The flow enhancer 12 diverts flow to the wall of the inner tube 7, for example, by blocking the center of the inner tube 7. The insert 12 may also have flow enhancer ribs 18 for directing the flow. The diversion of fluid flowing in the inner tube 7 by the flow enhancer 12 increases heat transfer between the fluid flowing through the inner tube 7 and the wall of the inner tube 7. The insert is arranged in the inner tube 7 in the region of the inner tube which is surrounded by the sleeve 8.

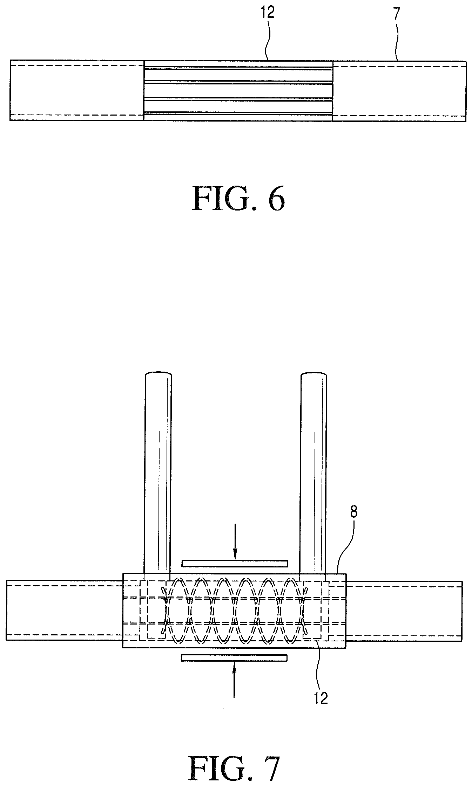

A method for making an internal heat exchanger includes a first step of providing an inner tube through which a fluid can flow in the axial direction. A sleeve having a spiral profile is positioned or slid around the inner tube. The spiral profile includes a first spiral groove and a second spiral groove. The first and second spiral grooves spiral in opposite directions and intersect at cross-points. The cross-points generate turbulence and add resistance to the fluid flowing through the sleeve. The sleeve is fixed in position around the inner tube, for example by pressing or crimping the sleeve onto the inner tube. As shown in FIGS. 5 and 6, an insert 12 can be inserted into the inner tube 7 and arranged in the region of the sleeve 8 which is or is to be arranged around the inner tube. The insert 12 can also be fixed in place as a result of the crimping of the sleeve 8 if the insert 12 is inserted into the inner tube 7 prior to the crimping of the sleeve onto the inner tube as shown in FIG. 7.

It is understood that the foregoing description is that of the preferred embodiments of the invention and that various changes and modifications may be made thereto without departing from the spirit and scope of the invention as defined in the appended claims.

### LIST OF REFERENCE NUMERALS

- 1: AC system
- 2: internal heat exchanger
- 3: evaporator
- 4: condenser
- 5: compressor
- 6: thermal expansion valve
- 7: inner tube/suction tube
- 8: sleeve/outer tube
- 9: spiral profile
- 10: clockwise spiral groove
- 11: counterclockwise spiral groove
- 12: flow enhancer
- 13: fluid inlet
- 14: fluid outlet
- 15: inlet tube
- 16: outlet tube
- 17: cross-point
- 18: flow enhancer rib

## Claims

1. An internal heat exchanger (2) comprising:
a sleeve (8) having
a thermally conductive spiral profile (9),
a fluid line inlet (15) and
a fluid line outlet (16),
an inner tube (7) having an inner tube wall and defining an axial direction,
said inner tube (7) defining an inner flow path through said inner tube (7) in said axial direction,
said sleeve (8) being arranged around a section of said inner tube (7); and,
said spiral profile (9) being configured to conduct a fluid supplied to said sleeve (8) along a spiral path so as to cause said fluid to be in fluid contact engagement with said inner tube wall,
**characterized in that**
an insert (12) configured to divert said flow path from the middle of the inner tube (7) toward the inner tube wall,
said insert (12) being arranged in said inner tube (7) in the region of said section of said inner tube (7) where said sleeve (8) is arranged,
said insert (12) comprising flow enhancer ribs (18) extending in the axial direction.

2. The internal heat exchanger (2) of claim 1, wherein
said spiral profile (9) includes at least one of a first spiral groove (10) running in a clockwise direction and a second spiral groove (11) running in a counterclockwise direction.

3. The internal heat exchanger (2) of claim 1, wherein:
said spiral profile (9) includes a first spiral groove (10) running in a clockwise direction and a second spiral groove (11) running in a counterclockwise direction; and,
said first spiral groove (10) and said second spiral groove (11) mutually intersect at at least a cross-point (17).

4. The internal heat exchanger (2) of claim 3, wherein
said cross-point (17) is configured to add turbulence to said fluid flowing through said sleeve (8).

5. The internal heat exchanger (2) of claim 1, wherein
said sleeve (8) is arranged in close proximity or in contact around said inner tube (7) so as to minimize said fluid supplied via said fluid inlet (13) from flowing through said sleeve (8) in said axial direction.

6. An internal heat exchanger (2) according to claim 1, wherein said spiral profile (9) includes a first spiral groove (10) running in clockwise direction and
a second spiral groove (11) running in a counterclockwise direction; said first and said second spiral grooves (10, 11) mutually intersect at at least a cross-point (17).

## Patentansprüche

1. Interner Wärmetauscher (2), umfassend:
eine Manschette (8) mit
einem wärmeleitfähigen Spiralprofil (9),
einem Fluidleitungseinlass (15) und
einem Fluidleitungsauslass (16),
ein Innenrohr (7) mit einer inneren Rohrwand, und
welches eine axiale Richtung definiert,
wobei das Innenrohr (7) einen inneren Strömungspfad durch das Innenrohr (7) in der axialen Richtung definiert,
die Manschette (8) um einen Abschnitt des Innenrohrs (7) herum angeordnet ist; und
das Spiralprofil (9) ausgestaltet ist, um ein der Manschette (8) zugeführtes Fluid einen spiralförmigen Pfad entlang zu führen, um so zu bewirken, dass das Fluid in Fluidkontaktkopplung mit der inneren Rohrwand ist,
**dadurch gekennzeichnet, dass**
ein Einsatz (12) ausgestaltet ist, um den Strömungspfad von der Mitte des Innenrohrs (7) in Richtung der inneren Rohrwand zu teilen,
der Einsatz (12) in dem Innenrohr (7) in der Region des Abschnitts des Innenrohrs (7) angeordnet ist, wo die Manschette (8) angeordnet ist,
der Einsatz (12) Strömungsverstärkungsrippen (18) umfasst, die sich in die axiale Richtung erstrecken.

2. Interner Wärmetauscher (2) nach Anspruch 1, wobei: das Spiralprofil (9) mindestens eine von einer ersten Spiralnut (10), die in einer Richtung im Uhrzeigersinn läuft, und einer zweiten Spiralnut (11) einschließt, die in einer Richtung gegen den Uhrzeigersinn läuft.

3. Interner Wärmetauscher (2) nach Anspruch 1, wobei:
das Spiralprofil (9) eine erste Spiralnut (10), die im Uhrzeigersinn läuft, und eine zweite Spiralnut (11) einschließt, die gegen den Uhrzeigersinn läuft; und
wobei die erste Spiralnut (10) und die zweite Spiralnut (11) einander an mindestens einem Kreuzungspunkt (17) schneiden.

4. Interner Wärmetauscher (2) nach Anspruch 3, wobei: der Kreuzungspunkt (17) so ausgestaltet ist, dass er dem durch die Manschette (8) strömenden Fluid Turbulenz verleiht.

5. Interner Wärmetauscher (2) nach Anspruch 1, wobei: die Manschette (8) in enger Nähe oder in Kontakt um das Innenrohr (7) herum angeordnet ist, um so zu minimieren, dass das über den Fluideinlass (13) zugeführte Fluid in der axialen Richtung durch die Manschette (8) hindurch fließt.

6. Interner Wärmetauscher (2) nach Anspruch 1, wobei das Spiralprofil (9) einschließt:
eine erste Spiralnut (10), die in einer Richtung im Uhrzeigersinn läuft, und
eine zweite Spiralnut (11), die in einer Richtung gegen den Uhrzeigersinn läuft;
wobei die erste Spiralnut und die zweite Spiralnut (10, 11) einander an mindestens einem Kreuzungspunkt (17) schneiden.

## Revendications

1. Échangeur de chaleur interne (2) comprenant :
un manchon (8) ayant
un profil spiralé thermiquement conducteur (9),
une entrée de conduite de fluide (15) et
une sortie de conduite de fluide (16),
un tube interne (7) ayant une paroi de tube interne et définissant une direction axiale, ledit tube interne (7) définissant un trajet d'écoulement intérieur à travers ledit tube interne (7) dans ladite direction axiale,
ledit manchon (8) étant disposé autour d'une section dudit tube interne (7) ; et,
ledit profil spiralé (9) étant conçu pour conduire un fluide conduit jusqu'audit manchon (8) le long d'un trajet en spirale de sorte à amener ledit fluide en contact fluidique avec ladite paroi de tube interne,
**caractérisé en ce que**
un insert (12) est conçu pour dévier ledit trajet d'écoulement du milieu du tube interne (7) vers la paroi de tube interne,
ledit insert (12) étant disposé dans ledit tube interne (7) dans la région de ladite section dudit tube interne (7) où ledit manchon (8) est disposé,
ledit insert (12) comprenant des nervures d'amélioration de l'écoulement (18) s'étendant dans la direction axiale.

2. Échangeur de chaleur interne (2) selon la revendication 1,
ledit profil spiralé (9) comprenant une première rainure en spirale (10) s'étendant dans le sens des aiguilles d'une montre et/ou une seconde rainure en spirale (11) s'étendant dans le sens inverse des aiguilles d'une montre.

3. Échangeur de chaleur interne (2) selon la revendication 1,
ledit profil spiralé (9) comprenant une première rainure en spirale (10) s'étendant dans le sens des aiguilles d'une montre et une seconde rainure en spirale (11) s'étendant dans le sens inverse des aiguilles d'une montre ; et
ladite première rainure en spirale (10) et ladite seconde rainure en spirale (11) se croisant mutuellement au moins à un point de croisement (17).

4. Échangeur de chaleur interne (2) selon la revendication 3,
ledit point de croisement (17) étant conçu pour ajouter de la turbulence audit fluide s'écoulant à travers ledit manchon (8).

5. Échangeur de chaleur interne (2) selon la revendication 1,
ledit manchon (8) étant disposé à proximité immédiate ou en contact autour dudit tube interne (7) de sorte à réduire au minimum ledit fluide conduit par l'intermédiaire de ladite entrée de fluide (13) s'écoulant à travers ledit manchon (8) dans ladite direction axiale.

6. Échangeur de chaleur interne (2) selon la revendication 1, ledit profil en spirale (9) comprenant
une première rainure en spirale (10) s'étendant dans le sens des aiguilles d'une montre et
une seconde rainure en spirale (11) s'étendant dans le sens inverse des aiguilles d'une montre ;
lesdites première et seconde rainures en spirale (10, 11) se croisant mutuellement au moins à un point de croisement (17).
